# EUROPEAN PATENT APPLICATION

(11) **EP 2 184 923 A2**
(43) Date of publication of application: **12.05.2010**
(21) Application number: 09174922.6
(22) Date of filing: 03.11.2009
(51) Int. Cl.: H04N 7/173, H04N 5/00

(54) **Moving-picture processing device, moving-picture processing method, and program**

(30) Priority: 10.11.2008 JP 2008287633
(71) Applicant: NEC CORPORATION, Minato-ku, Tokyo 108-8001 (JP)
(72) Inventor: Sumiyoshi, Yasuaki, Tokyo 108-8001 (JP)
(74) Representative: Ilgart, Jean-Christophe

(57) **Abstract**

A moving-picture processing device (1) includes: a moving-picture processing unit (3) subjecting moving-picture data (5) to a distribution process for distributing the moving-picture data; a distribution processing unit (4) sequentially distributing, in portions of an arbitrary moving picture reproduction time to an information processing terminal (6) that is connected by way of a network, moving-picture data that have undergone the distribution process; and a storage amount information acquisition unit (2) that acquires from the information processing terminal storage amount information that indicates the storage amount of pre-reproduction moving-picture data that are stored in the information processing terminal; wherein the moving-picture processing unit subjects the moving-picture data to the distribution process such that the reproduction quality of the moving-picture data changes according to the value indicated by the storage amount information.

## Description

### BACKGROUND OF THE INVENTION

### 1. Field of the Invention:

The present invention relates to a moving-picture processing device, a moving-picture processing method, and a program for distributing moving-picture data to an image-processing terminal.

### 2. Description of the Related Art:

In recent years, portable telephones include functions for receiving the distribution of moving-picture data by way of radio communication and reproducing the received moving-picture data. Corresponding to these functions, a moving-picture distribution server that distributes moving-picture data converts moving-picture data to a format that can be reproduced on a portable telephone that is the distribution destination and distributes the result, as disclosed in Patent Document 1 (JP-A-2004-222124). The size and other attributes of moving-picture data that can be reproduced vary according to the type of portable telephone. As a result, a distribution server converts the format of the moving-picture data in accordance with the type of portable telephone.

The moving-picture distribution server in the technology disclosed in the above-described Patent Document 1 fetches information about the portable telephone from the portable telephone and then converts moving-picture data such that appropriate reproduction is possible in that portable telephone.

This conversion of the moving-picture data takes time, and a delay is therefore produced from a request for the distribution of moving-picture data until the reproduction of the moving-picture data on the portable telephone.

This delay occurs not only when a portable telephone is used but can also occur in any information-processing terminal that receives the distribution of the moving-picture data.

This delay may cause a problem in which the user of an information-processing terminal will experience some dissatisfaction in viewing the moving-picture data that is distributed.

In addition, the radio communication state of the portable telephone may vary according to the state of movement or location of the user of the portable telephone. The problem therefore arises in which moving-picture data cannot be stably received and viewing of the moving-picture data is impeded.

### SUMMARY OF THE INVENTION

It is an object of the present invention to provide a moving-picture processing device, a moving-picture processing method, and a program that can improve the degree of user satisfaction when viewing moving-picture data that are distributed.

To achieve the above-described object, the moving-picture processing device of the present invention includes:
a moving-picture processing unit subjecting moving-picture data to a distribution process for distributing the moving-picture data;
a distribution processing unit sequentially distributing, in portions of an arbitrary moving picture reproduction time to an information processing terminal that is connected by way of a network, the moving-picture data that have undergone the distribution process; and
a storage amount information acquisition unit acquiring from the information processing terminal storage amount information that indicates the storage amount of the pre-reproduction moving-picture data that have been stored in the information processing terminal;
wherein the moving-picture processing unit subjects the moving-picture data to the distribution process such that the reproduction quality of the moving-picture data changes according to a value indicated by the storage amount information.

In addition, the moving-picture processing method is a moving-picture processing method in a moving-picture processing device for distributing moving-picture data to an information processing terminal and includes:
a process of acquiring storage amount information that indicates the storage amount of the pre-reproduction moving-picture data that have been stored in the information processing terminal;
a moving-picture process of subjecting the moving-picture data to a distribution process for distributing the moving-picture data such that the reproduction quality of the moving-picture data changes according to a value indicated by the storage amount information; and
a process of sequentially distributing, in portions of an arbitrary moving picture reproduction time to an information processing terminal that is connected by way of a network, the moving-picture data that have undergone the distribution process.

In addition, the program of the present invention causes a moving-picture processing device that distribute moving-picture data to an information processing terminal to realize:
a function of acquiring storage amount information that indicates the storage amount of the pre-reproduction moving-picture data that are stored in the information processing terminal;
a moving-picture processing function of subjecting the moving-picture data to a distribution process for distributing the moving-picture data such that the reproduction quality of the moving-picture data changes according to a value indicated by the storage amount information; and
a function of sequentially distributing, in portions of an arbitrary moving picture reproduction time to an information processing terminal that is connected by way of a network, the moving-picture data that have undergone the distribution process.

According to the present invention, the moving-picture processing device includes: the moving-picture processing unit for subjecting moving-picture data to a distribution process for distributing the moving-picture data; the distribution processing unit for sequentially distributing, in portions of an arbitrary moving picture reproduction time to an information processing terminal that is connected by way of a network, the moving-picture data that have undergone the distribution process; and a storage amount information acquisition unit that acquires from the information processing terminal storage amount information that indicates the storage amount of pre-reproduction moving-picture data that have been stored in the information processing terminal. The moving-picture processing unit then subjects the moving-picture data to a distribution process such that the reproduction quality of the moving-picture data changes according to a value indicated by the storage amount information.

As a result, the degree of user satisfaction when viewing the distributed moving-picture data can be improved.

The above and other objects, features, and advantages of the present invention will become apparent from the following description with reference to the accompanying drawings, which illustrate examples of the present invention.

### BRIEF DESCRIPTION OF THE DRAWINGS

FIG. 1 is a block diagram for describing an outline of the moving-picture processing device of the present invention;
FIG. 2 is a block diagram showing an embodiment of the moving-picture distribution system in which the moving-picture processing device of the present invention is applied;
FIG. 3 is a block diagram showing an example of the configuration of portable telephone shown in FIG. 2;
FIG. 4 is a block diagram showing an example of the configuration of the moving-picture distribution server shown in FIG. 2;
FIG. 5 is a view for explaining the state of distribution of moving-picture data in the moving-picture distribution system shown in FIG. 2;
FIG. 6 is a view for explaining the state of distribution of moving-picture data in the moving-picture distribution system shown in FIG. 2;
FIG. 7 is a view for explaining the state of distribution of moving-picture data in the moving-picture distribution system shown in FIG. 2;
FIG. 8 is a view for explaining the state of distribution of moving-picture data in the moving-picture distribution system shown in FIG. 2;
FIG. 9 shows the relation between the reproduction quality of moving-picture data that portable telephone receives and the storage amount of pre-reproduction moving-picture data that are stored in portable telephone 10 shown in FIGs. 2 and 3; and
FIG. 10 is a sequence chart for explaining the operations of the moving-picture distribution system shown in FIGs. 2-9.

### DESCRIPTION OF THE PREFERRED EMBODIMENTS

Embodiments of the present invention are next described with reference to the accompanying figures.

An outline of the moving-picture processing device of the present invention is first described.

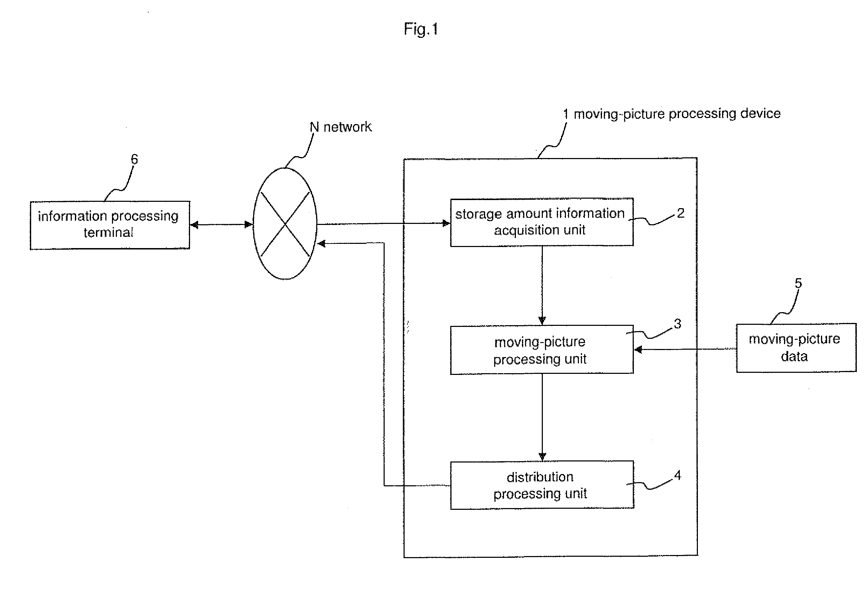

FIG. 1 is a block diagram for explaining an outline of the moving-picture processing device of the present invention.

As shown in FIG. 1, moving-picture processing device 1 is provided with: storage amount information acquisition unit 2, moving-picture processing unit 3, and distribution processing unit 4.

Storage amount information acquisition unit 2 fetches from information processing terminal 6 storage amount information that indicates the amount of pre-reproduction moving-picture data that are stored in information processing terminal 6.

Based on the storage amount information that was fetched by storage amount information acquisition unit 2, moving-picture processing unit 3 subjects moving-picture data 5 to a distribution process such that the reproduction quality of moving-picture data 5 changes. The distribution process is a process for distributing moving-picture data and is a process implemented upon moving-picture data according to the distribution destination of the moving-picture data.

Distribution processing unit 4 sequentially distributes, in portions of an arbitrary moving picture reproduction time to information processing terminal 6 that is connected by way of network N, moving-picture data that have undergone the distribution process.

This completes the outline of the moving-picture processing device of the present invention.

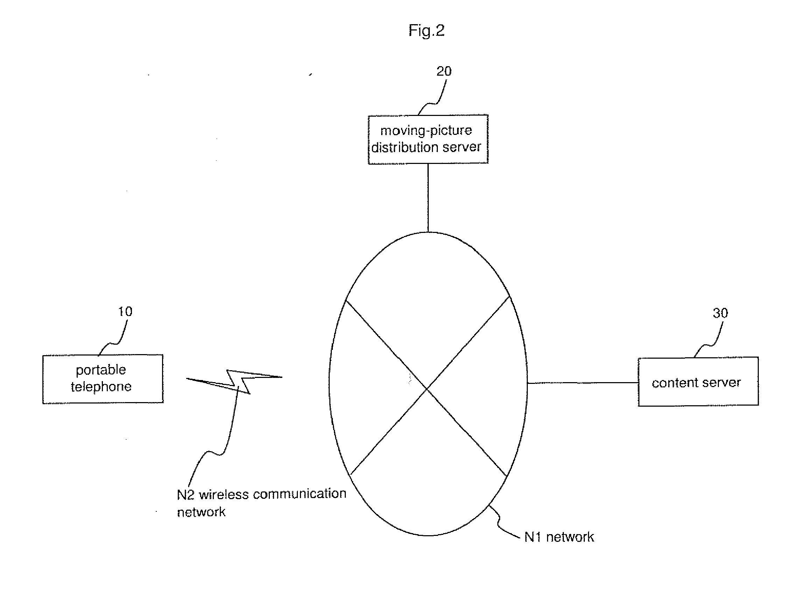

FIG. 2 is a block diagram showing an embodiment of the moving-picture distribution system in which the moving-picture processing device of the present invention is applied.

In the present embodiment, a portable telephone is offered as an example of the information processing terminal that is the distribution destination of moving-picture data. However, the information processing terminal that is the distribution destination of moving-picture data is not limited to a portable telephone, and further, is not limited to an information processing terminal that receives the distribution of moving-picture data by way of a wireless communication network. Essentially, the information processing terminal that is the distribution destination may be any kind of information processing terminal, and may be, for example, a personal computer that is connected by way of a cable network.

### (Overall Configuration)

As shown in FIG. 2, the moving-picture distribution system of the present embodiment is provided with: portable telephone 10 that is manipulated by a user that views moving-picture data; moving-picture distribution server 20 that is the moving-picture processing device; and content server 30 that stores moving-picture data.

Content server 30 and moving-picture distribution server 20 are each connected by way of network N1 such as an Internet network. Portable telephone 10 is connected to moving-picture distribution server 20 by way of network N1 such as an Internet network or a portable telephone network and wireless communication network N2.

### (Configuration of Portable Telephone)

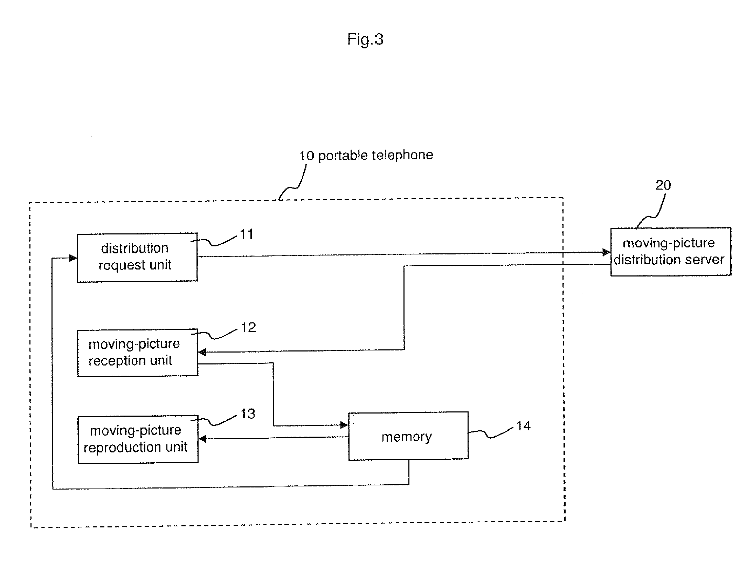

FIG. 3 is a block diagram showing an example of the configuration of portable telephone 10 shown in FIG. 2.

Portable telephone 10 in the present embodiment is a typical portable telephone that is provided with an arithmetic unit, a memory unit, a communication unit, a console unit and a display device; and the communication capability is of course provided with a data communication capability. Portable telephone 10 is provided with the capability to reproduce moving-picture data that are distributed from a server computer on a network. Explanation of the basic functions of portable telephone 10 is here omitted.

As shown in FIG. 3, portable telephone 10 shown in FIG. 2 is provided with: distribution request unit 11, moving-picture reception unit 12, and moving-picture reproduction unit 13 that are created by the installation of a program in a CPU (not shown) that is the arithmetic unit; and with memory 14.

Distribution request unit 11 transmits a distribution request to moving-picture distribution server 20. The distribution request is a command for requesting the distribution of moving-picture data that the user wishes to view. The distribution request includes content-specifying information for identifying the content, i.e., moving-picture data. The content-specifying information is generated by, for example, accessing a website that is established by moving-picture distribution server 20 from portable telephone 10 and then selecting the content that is to be viewed from among a list of content that is displayed on the website. The distribution request further includes terminal information. The terminal information is information indicating the specifications of the portable telephone 10, and for example, is model information indicating the model of portable telephone 10 or format information that indicates the format of moving-picture data that can be reproduced on portable telephone 10. The terminal information is stored in advance in memory 14. Distribution request unit 11 reads the terminal information that is stored in memory 14, includes the terminal information that has been read together with the content-specifying information in a distribution request and transmits it to moving-picture distribution server 20. Distribution request unit 11 further transmits to moving-picture distribution server 20 storage amount information that indicates the amount of pre-reproduction moving-picture data that are stored in memory 14 of portable telephone 10. This storage amount information is, for example, transmitted when transmitting a distribution request or, as will be explained hereinbelow, at fixed time intervals or at a timing that is determined in advance during reproduction of moving-picture data. In addition, distribution request unit 11 further transmits to moving-picture distribution server 20 together with storage amount information state-of-use information, which indicates the state of use of resources that are provided in portable telephone 10 such as the memory or CPU, and resource information, which includes maximum values of the performance of resources such as the memory or CPU. Resource information is stored in advance in memory 14.

Moving-picture reception unit 12 receives moving-picture data that are distributed from moving-picture distribution server 20 and stores the moving-picture data in memory 14. At this time, moving-picture data of an arbitrary reproduction time are sequentially distributed from moving-picture distribution server 20, and moving-picture reception unit 12 sequentially receives these data.

Moving-picture reproduction unit 13 reproduces moving-picture data that are stored in memory 14, and the user of portable telephone 10 is thus able to view the moving-picture data. Moving-picture data for which reproduction has been completed are sequentially discarded.

### (Configuration of the Moving-Picture Distribution Server)

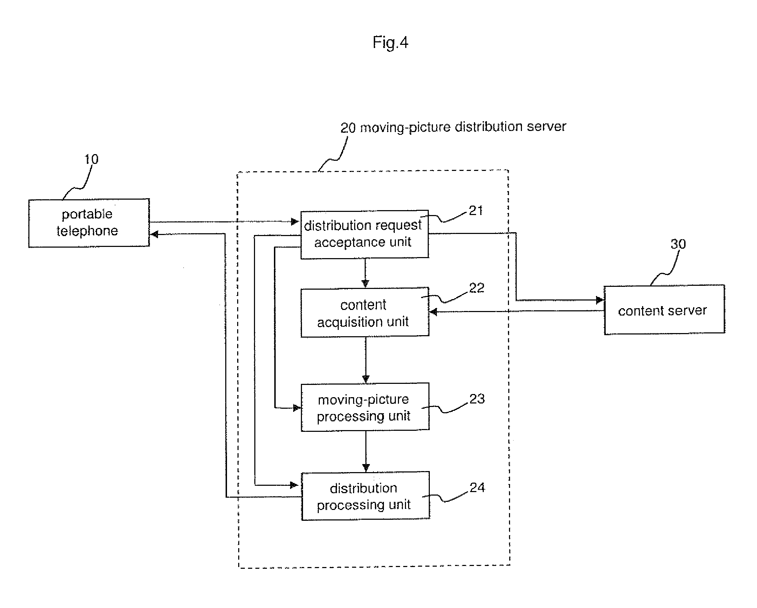

FIG. 4 is a block diagram showing an example of the configuration of moving-picture distribution server 20 shown in FIG. 2. Moving-picture distribution server 20 is a typical server computer that is provided with an arithmetic unit, a memory unit, and a communication unit.

As shown in FIG. 4, moving-picture distribution server 20 shown in FIG. 2 is provided with: distribution request acceptance unit 21 that is the storage amount information acquisition unit and resource information acquisition unit; content acquisition unit 22, moving-picture processing unit 23, and distribution processing unit 24 that are created by installation of a program in a CPU, i.e., the arithmetic unit.

Distribution request acceptance unit 21 receives a distribution request that is transmitted from portable telephone 10. Distribution request acceptance unit 21 then issues a request to content server 30 for content that is specified by the content-specifying information contained in the distribution request that was received. At this time, distribution request acceptance unit 21 receives the above-described storage amount information and resource information together with the distribution request that was transmitted from portable telephone 10 and supplies the storage amount information and resource information to moving-picture processing unit 23 and distribution processing unit 24. Distribution request acceptance unit 21 further receives storage amount information and resource information that were transmitted from portable telephone 10 at times other than when receiving a distribution request, and supplies the storage amount information and resource information that were received to moving-picture processing unit 23 and distribution processing unit 24. In this way, moving-picture distribution server 20 is always able to recognize the current state of portable telephone 10.

Content acquisition unit 22 receives moving-picture data that are the content transmitted from content server 30. Content server 30 stores, for example, moving-picture data having a predetermined data amount at the time of reproduction. These moving-picture data are stored in any format. Of the moving-picture data that are stored, content server 30 transmits the moving-picture data that correspond to the requested content to moving-picture distribution server 20 in accordance with the time sequence of the reproduction time of the moving-picture data. Content acquisition unit 22 then sequentially supplies the moving-picture data that were received to moving-picture processing unit 23.

Moving-picture processing unit 23 subjects the moving-picture data that were supplied from content acquisition unit 22 to the distribution process. As an example of the distribution process at this time, moving-picture processing unit 23 converts the moving-picture data to a format that corresponds to portable telephone 10 based on model information or format information of moving pictures that can be reproduced that was transmitted from portable telephone 10. Alternatively, moving-picture processing unit 23 subjects the moving-picture data to a distribution process such that the reproduction quality of the moving-picture data varies according to the storage amount information or resource information that was supplied from distribution request acceptance unit 21. Moving-picture processing unit 23 then supplies the moving-picture data that have undergone the distribution process to distribution processing unit 24.

Distribution processing unit 24 receives the moving-picture data that have undergone the distribution process and that were supplied from moving-picture processing unit 23. Distribution processing unit 24 then distributes the moving-picture data that were received to portable telephone 10. Distribution processing unit 24 sequentially distributes moving-picture data in portions of an arbitrary moving picture reproduction time, and the data volume that is distributed each time may be a fixed value that was determined in advance, or may vary according to storage amount information or resource information that was supplied from distribution request acceptance unit 21.

The operations of moving-picture processing unit 23 and distribution processing unit 24 will next be described in detail.

First, moving-picture processing unit 23 changes the reproduction quality of the moving-picture data by changing the data amount per unit time during reproduction of the moving-picture data according to the size of the value indicated by the storage amount information. For example, the smaller the value indicated by the storage amount information (the smaller the storage amount), the lower moving-picture processing unit 23 sets the reproduction quality of the moving-picture data with the aim of enabling continuous reproduction of moving-picture data in portable telephone 10. In this way, moving-picture data for distribution that have a small data amount are generated. Then, when the value indicated by the storage amount information is no greater than a minimum value that was determined in advance, distribution processing unit 24 distributes the moving-picture data in bursts of a short reproduction time. In other words, moving-picture data of a small data amount are distributed. However, when the value indicated by the storage amount information is small but exceeds a minimum value that was determined in advance, distribution processing unit 24 distributes the moving-picture data in bursts of a longer reproduction time.

On the other hand, the larger the value indicated by the storage amount information (the greater the storage amount), the higher the moving-picture processing unit 23 sets the reproduction quality to generate moving-picture data. Accordingly, distribution processing unit 24 distributes moving-picture data in bursts of a short reproduction time such that the time period of receiving moving-picture data by portable telephone 10 does not become excessively long.

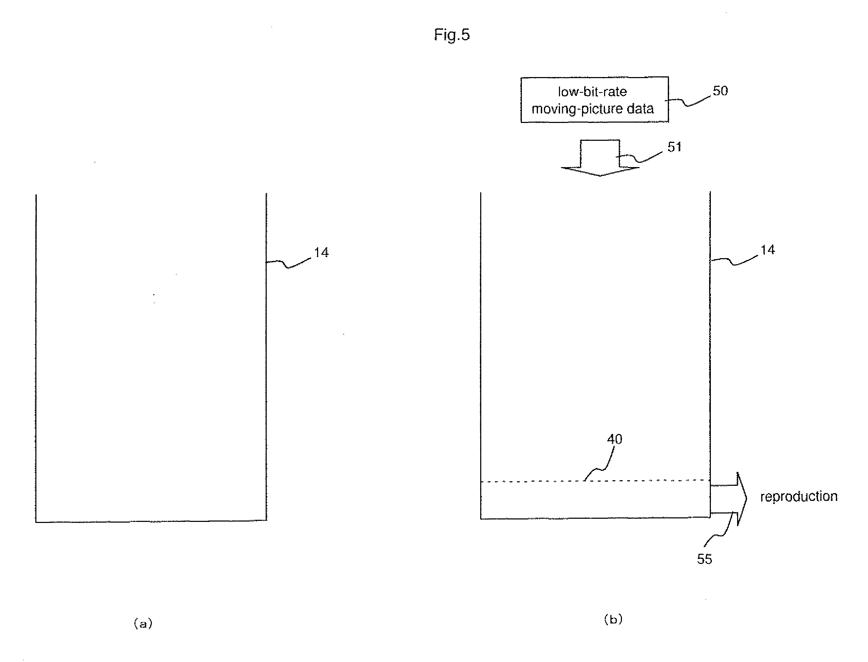

FIGs. 5-8 are figures for explaining the state of distribution of moving-picture data in the moving-picture distribution system shown in FIG. 2, (a) and (b) both indicating pre-reproduction moving-picture data that are stored in memory 14 provided in portable telephone 10.

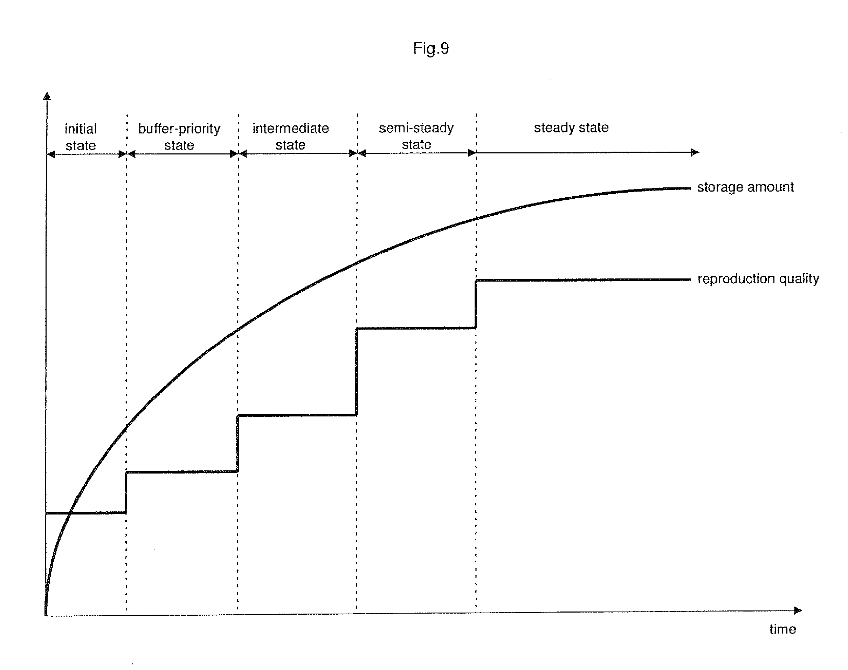

FIG. 9 is a view showing the relation between the storage amount of pre-reproduction moving-picture data that are stored in portable telephone 10 shown in FIGs. 2 and 3 and the reproduction quality of the moving-picture data that are received by portable telephone 10.

First, FIG. 5(a) shows the state of memory 14 at the time of the start of distribution of moving-picture data by moving-picture distribution server 20. At this point in time, moving-picture data are not stored in memory 14, and portable telephone 10 transmits to moving-picture distribution server 20 storage amount information that indicates that the storage amount is "0" together with a distribution request.

In this case, as shown in FIG. 5(b), moving-picture processing unit 23 of moving-picture distribution server 20 generates low-bit-rate (low image quality) moving-picture data 50 that are moving-picture data of the minimum bit rate that allows viewing of the moving-picture data when the moving-picture data are reproduced in portable telephone 10. Distribution processing unit 24 then distributes to portable telephone 10 low-bit-rate moving-picture data 50 having the minimum reproduction time required for reproduction of the moving-picture data on portable telephone 10. In FIG.5 and in the zone shown by "initial state" in FIG.9, the image quality of distributed moving-picture data 51 that are distributed is of the minimum image quality, and for example, moving-picture data in portions of a two-second reproduction time are sequentially distributed to portable telephone 10. In this case, moving-picture data having a small data amount that are of low image quality and short reproduction time portions are sequentially distributed and stored in portable telephone 10. As a result, reproduction can begin quickly.

FIG. 5(b) shows the state in which moving-picture data are steadily stored in memory 14 and reproduction is continued. In FIG. 5(b), data amount 40 indicates the amount of data of moving-picture data that are stored in memory 14. In addition, output data 55 indicates, from among the moving-picture data that are stored in memory 14, the moving-picture data that are supplied for reproduction. During this period as well, distribution request acceptance unit 21 of moving-picture distribution server 20 periodically receives storage amount information that is transmitted from portable telephone 10.

When the storage amount information transmitted from portable telephone 10 subsequently surpasses the minimum value that was determined in advance, the "buffer-priority state" shown in FIG. 9 results. In this case, although the image quality is low, moving-picture processing unit 23 and distribution processing unit 24 carry out distribution that prioritizes storage of the moving-picture data in memory 14.

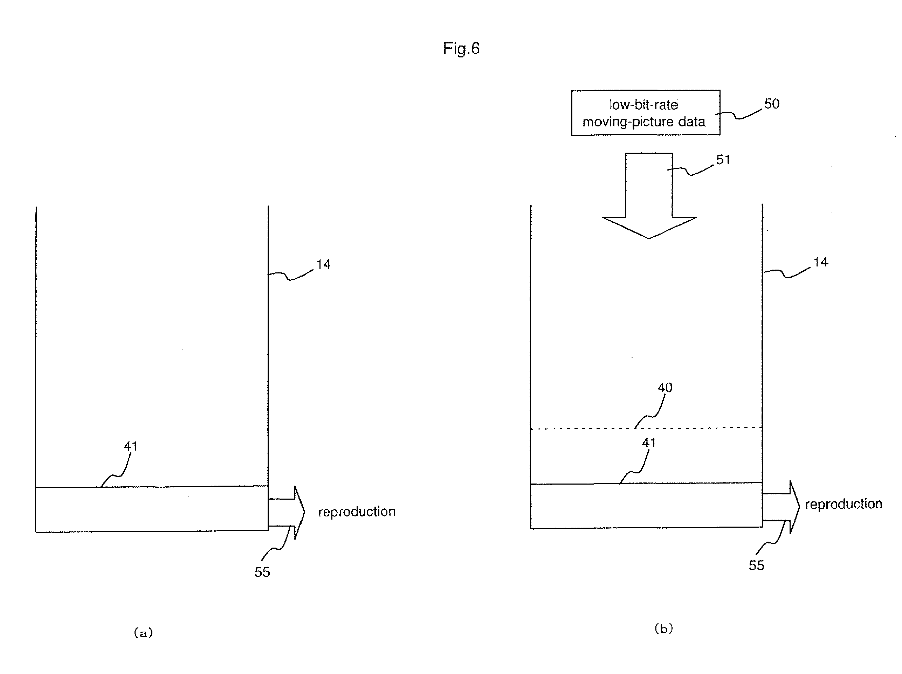

FIG. 6(a) shows the state when moving-picture data of minimum value 41 that was determined in advance are stored in memory 14. Because there is a certain storage amount, moving-picture processing unit 23 generates low-bit-rate moving-picture data 50 in which the reproduction quality is slightly increased. Distribution processing unit 24 then distributes distributed moving-picture data 51 in portions of reproduction time that are somewhat longer time than in the initial state. Thus, as shown in FIG. 6(b), although there are output data 55 supplied for reproduction from memory 14, moving-picture data having a data amount that exceeds this are distributed to portable telephone 10. As a result, the storage amount of moving-picture data in memory 14 increases. In addition, the image quality of the moving-picture data can be raised, although only by a slight degree.

When the storage amount information reported from portable telephone 10 exceeds an intermediate value that has been determined in advance, the "intermediate state" shown in FIG. 9 results, and moving-picture processing unit 23 and distribution processing unit 24 implement distribution of moving-picture data that takes into consideration the increase of the storage amount of the moving-picture data in memory 14 while raising the image quality.

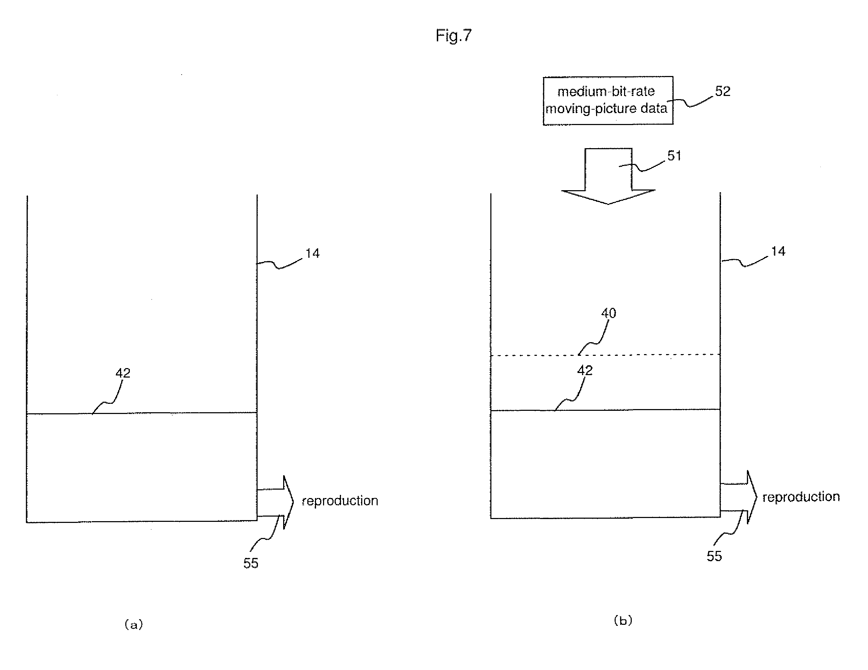

FIG. 7(a) shows the state when moving-picture data of intermediate value 42 that is determined in advance are stored in memory 14. Due to this storage amount, moving-picture processing unit 23 generates medium-bit-rate moving-picture data 52 which are moving-picture data of medium image quality in which the reproduction quality is further increased over the previous image quality. Distribution processing unit 24 then distributes distributed moving-picture data 51 in bursts of a reproduction time that is shorter time than during the buffer-priority state but that is equivalent to or longer than the actual reproduction time. In this way, as shown in FIG. 7(b), although there are output data 55 that are supplied by reproduction from memory 14, moving-picture data having an equal or greater data amount are distributed to portable telephone 10. As a result, the storage amount of moving-picture data in memory 14 further increases, although only by small degrees. In addition, the image quality of the moving-picture data can be further increased.

When the storage amount information reported from portable telephone 10 surpasses a high storage value that is determined in advance, the "semi-steady state" or "steady state" shown in FIG. 9 results, and moving-picture processing unit 23 and distribution processing unit 24 distribute moving-picture data such that the storage amount of moving-picture data to memory 14 does not decrease while further increasing the image quality.

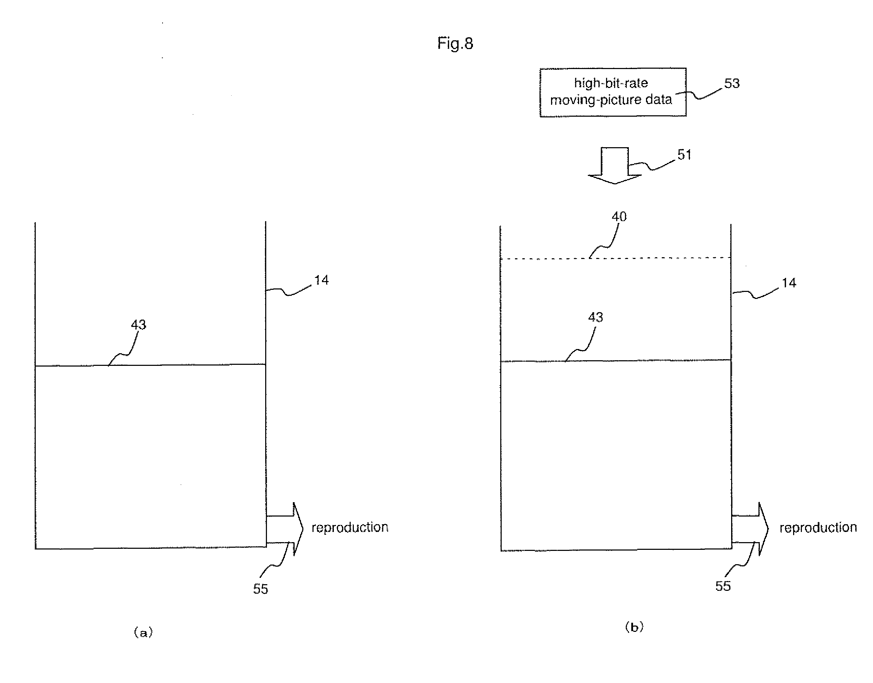

FIG. 8(a) shows the state when moving-picture data having high storage value 43 that is determined in advance are stored in memory 14. Due to this ample storage amount, moving-picture processing unit 23 generates high-bit-rate moving-picture data 53 that are moving-picture data of high quality in which the reproduction quality has been further increased over previous image quality. Distribution processing unit 24 distributes distributed moving-picture data 51 in bursts of reproduction time that is shorter time than the intermediate state but that is equivalent to or longer than the actual reproduction time. In this way, as shown in FIG. 8(b), although there are output data 55 that are supplied as output due to reproduction from memory 14, moving-picture data having an equivalent or greater data amount are distributed to portable telephone 10. As a result, the storage amount of moving-picture data in memory 14 is uniformly maintained without reduction. In addition, the image quality of the moving-picture data can be further increased.

In addition, moving-picture processing unit 23 and distribution processing unit 24 change the data amount that is distributed or the distribution process of moving-picture data according to, in addition to the storage amount information to memory 14 of portable telephone 10, resource information that is reported from portable telephone 10. For example, when the state of use of the CPU is close to the maximum, moving-picture processing unit 23 implements a distribution process that instead of setting the quality of moving-picture data to still higher quality, keeps the quality of moving-picture data uniform or reduces the quality such that the state of use of the CPU due to moving-picture data that are delivered does not reach the maximum. In addition, even when the state of use of memory 14 approaches a maximum, moving-picture processing unit 23 implements the distribution process such that, instead of setting the quality of moving-picture data to still higher quality, keeps the quality uniform or reduces the quality such that the state of use of memory 14 does not reach the maximum. Alternatively, distribution processing unit 24 limits the data amount that is distributed or vacates the spacing of distributing moving-picture data to distribute moving-picture data in portions of a short reproduction time. In this way, the load at portable telephone 10 can be limited and the reproduction of moving-picture data optimized. As a result, the degree of user satisfaction when viewing moving-picture data that have been distributed can be improved.

### (Operation)

The operations of the moving-picture distribution system that is configured as described above are next described.

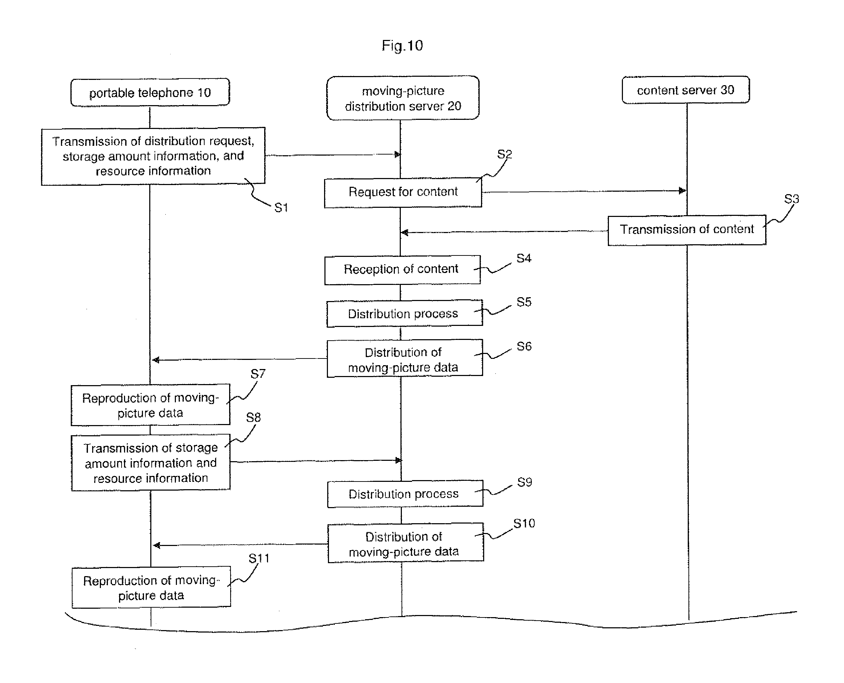

FIG. 10 is a sequence chart for explaining the operations of the moving-picture distribution system shown in FIGs. 2-9.

The user of portable telephone 10 first, by manipulating portable telephone 10, accesses a website that is established by moving-picture distribution server 20 and selects content on the website that the user wishes to view.

In Step S1, distribution request unit 11 of portable telephone 10 next transmits to moving-picture distribution server 20 a distribution request that includes content-specifying information and, for example, model information or format information. At this time, distribution request unit 11 transmits to moving-picture distribution server 20 storage amount information and resource information together with the distribution request.

Distribution request acceptance unit 21 of moving-picture distribution server 20 receives the storage amount information and resource information together with the distribution request that was transmitted from portable telephone 10.

In Step S2, distribution request acceptance unit 21 next issues a request to content server 30 for the content that is specified by the content-specifying information that was contained in the received distribution request.

Distribution request acceptance unit 21 supplies the received storage amount information and resource information to moving-picture processing unit 23 and distribution processing unit 24.

In Step S3, content server 30 next, in accordance with the request from moving-picture distribution server 20, reads the moving-picture data that are the requested content from the database that stores various content and transmits the moving-picture data to moving-picture distribution server 20.

In Step S4, content acquisition unit 22 of moving-picture distribution server 20 receives the moving-picture data that were sequentially transmitted from content server 30

Content acquisition unit 22 then supplies the received moving-picture data to moving-picture processing unit 23.

Moving-picture processing unit 23 receives the moving-picture data that were supplied from content acquisition unit 22 and the storage amount information and resource information that were supplied from distribution request acceptance unit 21.

In Step S5, moving-picture processing unit 23 next subjects the received moving-picture data to the distribution process. Here, moving-picture processing unit 23 converts the moving-picture data to a format based on, for example, the model information or format information that was contained in the distribution request transmitted from portable telephone 10. Moving-picture processing unit 23 further changes the reproduction quality of the moving-picture data according to the storage amount information or resource information that was supplied from distribution request acceptance unit 21.

More specifically, at the time of starting distribution of moving-picture data, the storage amount of moving-picture data that are stored in memory 14 of portable telephone 10 is "0." As a result, moving-picture processing unit 23 generates low-bit-rate moving-picture data 50 that is the minimum that can be viewed when reproduced on portable telephone 10.

Moving-picture processing unit 23 then supplies moving-picture data 50 that have been generated to distribution processing unit 24.

Distribution processing unit 24 receives moving-picture data 50 that were supplied from moving-picture processing unit 23.

In Step S6, distribution processing unit 24 distributes to portable telephone 10, of moving-picture data 50 that were received, moving-picture data of reproduction time that is equal to or greater than the minimum time necessary for reproduction on portable telephone 10. For example, moving-picture data that are of the minimum low-image quality, and moreover, that are arranged in portions on the order of one- or two-second reproduction time are sequentially distributed to portable telephone 10.

Moving-picture reception unit 12 of portable telephone 10 receives the moving-picture data that were distributed from moving-picture distribution server 20 and supplies the received moving-picture data to memory 14.

In Step S7, moving-picture reproduction unit 13 reproduces the moving-picture data that were stored in memory 14, thus allowing the user of portable telephone 10 to view moving-picture data of the requested content.

In this way, moving-picture data that are of the minimum low-image quality, and moreover, that are in portions of a short reproduction time are distributed to portable telephone 10 in the initial state shown in FIG. 9. As a result, moving-picture data of low image quality are quickly stored in portable telephone 10. As a result, moving pictures can be viewed without delay.

Subsequently, while the reception and reproduction of moving-picture data is continued, distribution request unit 11 of portable telephone 10 in Step S8 transmits to moving-picture distribution server 20 storage amount information at fixed time intervals or at a timing that is determined in advance. At this time, distribution request unit 11 also transmits resource information together with the storage amount information to moving-picture distribution server 20.

Distribution request acceptance unit 21 of moving-picture distribution server 20 receives the storage amount information and resource information that were transmitted from portable telephone 10.

Distribution request acceptance unit 21 next supplies the storage amount information and resource information that were received to moving-picture processing unit 23 and distribution processing unit 24.

Moving-picture processing unit 23 receives the storage amount information and resource information that were supplied from distribution request acceptance unit 21, and in Step S9, generates moving-picture data in which the image quality is changed according to the received storage amount information and resource information.

Moving-picture processing unit 23 supplies the moving-picture data that were generated to distribution processing unit 24.

Distribution processing unit 24 that has received the storage amount information and resource information that were supplied from distribution request acceptance unit 21 and the moving-picture data that were supplied from moving-picture processing unit 23 changes the data amount according to the received storage amount information and resource information and distributes moving-picture data to portable telephone 10 in Step S10.

The above-described operations from Step S8 to Step S11 are repeated. More specifically, when the storage amount information that was reported from portable telephone 10 surpasses minimum value 41 that was determined in advance, the "buffer-priority state" shown in FIG. 9 results. In this case, moving-picture distribution server 20 distributes moving-picture data while prioritizing storage of moving-picture data to memory 14, although the moving-picture data are of low image quality. For example, moving-picture distribution server 20 generates moving-picture data that, while of low image quality, have reproduction quality that is slightly increased over that of the above-described initial state. In addition, moving-picture data are distributed in bursts of a reproduction time that is even longer than the initial state. As a result, not only can the image quality of the moving-picture data be raised, but the storage amount of moving-picture data in memory 14 can also be increased.

When the storage amount information reported from portable telephone 10 surpasses intermediate value 42 that is determined in advance, the "intermediate state" shown in FIG. 9 results. In this case, moving-picture distribution server 20 distributes moving-picture data while taking into consideration increase of the storage amount of moving-picture data to memory 14 while also raising the image quality. For example, when there is a certain storage amount, moving-picture data of the intermediate image quality in which the reproduction quality is further increased are generated. Moving-picture data are distributed in bursts of a reproduction time that is shorter than in the buffer-priority state but that is equal to or greater than the actual reproduction time. In this way, the storage amount of moving-picture data in memory 14 can be increased a little at a time while the image quality of moving-picture data is increased.

When the value indicated by the storage amount information that is transmitted from portable telephone 10 subsequently surpasses high storage value 43 that is determined in advance, the "semi-steady state" or "steady state" shown in FIG. 9 results. In this case, moving-picture distribution server 20, while raising the image quality, distributes moving-picture data such that the storage amount of moving-picture data to memory 14 does not diminish. For example, when the storage amount is ample, moving-picture distribution server 20 generates moving-picture data of high image quality in which the reproduction quality is increased over previous levels. Moving-picture data are then distributed in bursts of a reproduction time that, although shorter than during the intermediate state, is equivalent or greater than the actual reproduction time . In this way, moving-picture distribution server 20 can suppress a decrease of the storage amount of moving-picture data in memory 14 to keep the storage amount uniform while further raising the image quality of moving-picture data.

In this way, moving-picture distribution server 20 in the present embodiment includes: moving-picture processing unit 23 for subjecting moving-picture data to a distribution process for distributing the moving-picture data; distribution processing unit 24 for sequentially distributing, in portions of an arbitrary moving picture reproduction time to portable telephone 10 that is connected by way of a network, the moving-picture data that have undergone the distribution process; and distribution request acceptance unit 21 for fetching from portable telephone 10 storage amount information that indicates a storage amount of pre-reproduction moving-picture data that have been stored in portable telephone 10. Moving-picture processing unit 23 then subjects the moving-picture data to the distribution process such that the reproduction quality of the moving-picture data changes according to the value that is indicated by the storage amount information.

For example, when the value indicated by the storage amount information is "0," moving-picture data of low image quality and of a small data amount are distributed in portions of a reproduction time of short duration to enable a quick start of reproduction. When moving-picture data that have not been reproduced are stored in portable telephone 10, moving-picture data are generated for distribution in which the image quality is low and the data amount is limited to distribute moving-picture data in bursts of a longer reproduction time. In other words, moving-picture processing unit 23 subjects the moving-picture data to a distribution process such that the smaller the value indicated by the storage amount information (the lower the storage amount), the lower the reproduction quality of the moving-picture data. In this way, the storage amount of moving-picture data can be increased while ensuring continuous reproduction in portable telephone 10.

On the other hand, when the value indicated by the storage amount information becomes large (ample storage amount), moving-picture data of even higher image quality are generated to distribute moving-picture data in bursts of a short reproduction time. In other words, moving-picture processing unit 23 subjects moving-picture data to a distribution process such that the greater the value indicated by the storage amount information (the greater the storage amount), the higher the reproduction quality of the moving-picture data. In this way, higher picture quality can be achieved in portable telephone 10 while limiting a decrease in the storage amount of moving-picture data to ensure continuous reproduction.

Accordingly, according to the state of portable telephone 10, higher image quality of moving-picture data can be achieved while ensuring continuous reproduction. As a result, the degree of user satisfaction when viewing moving-picture data that are distributed can be improved.

Finally, moving-picture distribution server 20 in the present embodiment is not necessarily made up from a single information processing device, and each of the functions provided in moving-picture distribution server 20 may be provided by being dispersed among a multiplicity of information processing devices.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined in the claims.

## Claims

1. A moving-picture processing device (1) comprising:
a moving-picture processing unit (3) subjecting moving-picture data (5) to a distribution process for distributing the moving-picture data (5);
a distribution processing unit (4) sequentially distributing said moving-picture data (5) that have undergone said distribution process in portions of an arbitrary moving picture reproduction time to an information processing terminal (6) that is connected by way of a network; and
a storage amount information acquisition unit (2) acquiring from the information processing terminal (6) storage amount information that indicates the storage amount of said moving-picture data (5) before reproduction that have been stored in said information processing terminal (6);
wherein said moving-picture processing unit (3) subjects the moving-picture data (5) to said distribution process such that the reproduction quality of said moving-picture data (5) changes according to a value indicated by said storage amount information.

2. The moving-picture processing device (1) according to claim 1, wherein said moving-picture processing unit (3) subjects the moving-picture data (5) to said distribution process such that the reproduction quality of said moving-picture data (5) increases with an increase of the value indicated by said storage amount information and reproduction quality of said moving-picture data (5) decreases with a decrease of the value indicated by said storage amount information.

3. The moving-picture processing device (1) according to claim 1 or claim 2, wherein said moving-picture processing unit (3) subjects the moving-picture data (5) to said distribution process such that, when the value indicated by said storage amount information surpasses a minimum value that is determined in advance, the reproduction quality of said moving-picture data (5) increases with an increase in the value indicated by the storage amount information and the reproduction quality of said image data decreases with a decrease of the value indicated by said storage amount information.

4. The moving-picture processing device (1) according to any one of claims 1 to 3, wherein:
said moving-picture processing unit (3) subjects said moving-picture data (5) to said distribution process such that, at the start of distribution of said moving-picture data (5) to said information processing terminal (6) by said distribution processing unit (4), said moving-picture data (5) are of the minimum reproduction quality that allows viewing when said moving-picture data (5) are reproduced in the information processing terminal (6); and
said distribution processing unit (4) distributes to the information processing terminal (6) said moving-picture data (5) that are of at least the minimum reproduction time necessary for reproduction in said information processing terminal (6).

5. The moving-picture processing device (1) according to any one of claims 1 to 4, wherein said moving-picture processing unit (3) changes the reproduction quality of the moving-picture data (5) by changing the data amount per unit time during reproduction of said moving-picture data (5).

6. The moving-picture processing device (1) according to any one of claims 1 to 5, further comprising:
a resource information acquisition unit acquiring from the information processing terminal (6) resource information that represents the state of use of resources provided in said information processing terminal (6);
wherein said moving-picture processing unit (3) sets the reproduction quality of said moving-picture data (5) based on said resource information and then subjects said moving-picture data (5) to said distribution process to achieve the reproduction quality that was set.

7. The moving-picture processing device (1) according to claim 6, wherein said moving-picture processing unit (3) sets the reproduction quality of said moving-picture data (5) based on said resource information such that the state of use of resources provided in the information processing terminal (6) does not reach an upper limit due to said moving-picture data (5) that are distributed to said information processing terminal (6).

8. The moving-picture processing device (1) according to any one of claims 1 to 5, further comprising:
a resource information acquisition unit acquiring from said information processing terminal (6) resource information that represents the state of use of resources provided in said information processing terminal (6);
wherein said distribution processing unit (4) sets the reproduction time of said moving-picture data (5) that are distributed based on said resource information and distributes said moving-picture data (5) in portions of the reproduction time that was set.

9. The moving-picture processing device (1) according to claim 8, wherein said distribution processing unit (4) sets the reproduction time of said moving-picture data (5) that are distributed based on said resource information such that the state of use of resources provided in the information processing terminal (6) do not reach an upper limit due to said moving-picture data (5) that are distributed to said information processing terminal (6).

10. A moving-picture processing method in a moving-picture processing device (1) distributing moving-picture data (5) to an information processing terminal (6), said method comprising:
a process of acquiring storage amount information that indicates the storage amount of said moving-picture data (5) before reproduction that have been stored in said information processing terminal (6);
a moving picture process of subjecting the moving-picture data (5) to a distribution process for distributing said moving-picture data (5) such that the reproduction quality of said moving-picture data (5) changes according to a value indicated by said storage amount information; and
a process of sequentially distributing, in portions of an arbitrary moving picture reproduction time to an information processing terminal (6) that is connected by way of a network, said moving-picture data (5) that have undergone said distribution process.

11. The moving-picture processing method according to claim 10, wherein said moving-picture process is a process of subjecting the moving-picture data (5) to said distribution process such that the reproduction quality of said moving-picture data (5) increases with an increase in the value indicated by said storage amount information and the reproduction quality of said moving-picture data (5) decreases with a decrease of the value indicated by said storage amount information.

12. The moving-picture processing method according to claim 10 or claim 11, wherein said moving-picture process is a process of subjecting the moving-picture data (5) to said distribution process such that, when a value indicated by said storage amount information surpasses a minimum value that is determined in advance, the reproduction quality of said moving-picture data (5) increases with an increase in a value indicated by the storage amount information and the reproduction quality of said moving-picture data (5) decreases with a decrease of the value indicated by said storage amount information.

13. A program for causing a moving-picture processing device (1) that distributes moving-picture data (5) to an information processing terminal (6) to realize:
a function of acquiring storage amount information that indicates the storage amount of said moving-picture data (5) before reproduction that are stored in said information processing terminal (6);
a moving picture processing function of subjecting the moving-picture data (5) to a distribution process for distributing the moving-picture data (5) such that the reproduction quality of said moving-picture data (5) changes according to a value indicated by said storage amount information; and
a function of sequentially distributing, in portions of an arbitrary moving picture reproduction time to an information processing terminal (6) that is connected by way of a network, said moving-picture data (5) that have undergone said distribution process.

14. The program according to claim 13,
wherein said moving-picture processing function is a function of subjecting the moving-picture data (5) to said distribution process such that the reproduction quality of said moving-picture data (5) increases with an increase in a value indicated by said storage amount information and the reproduction quality of said moving-picture data (5) decreases with a decrease of the value indicated by said storage amount information.

15. The program according to claim 13 or claim 14, wherein said moving-picture processing function is a function of subjecting the moving-picture data (5) to said distribution process such that, when a value indicated by said storage amount information surpasses a minimum value that is determined in advance, the reproduction quality of said moving-picture data (5) increases with an increase in the value indicated by the storage amount information and the reproduction quality of said moving-picture data (5) decreases with a decrease of the value indicated by said storage amount information.
